# NOUVEAU FASCICULE DE BREVET EUROPEEN

(11) **EP 3 380 235 B2**
(45) Date de publication et mention de la décision concernant l'opposition: **03.09.2025**
(45) Mention de la délivrance du brevet: 20.07.2022
(21) Numéro de dépôt: 16801228.4
(22) Date de dépôt: 24.11.2016
(51) Int. Cl.: B01J 39/16, B01J 47/00, C01D 15/00, C01F 7/025, B01J 20/02, B01J 20/04, B01J 20/28, B01J 20/30, C01F 7/78, C01F 7/782

(54) **PROCEDE DE PREPARATION D'UN MATERIAU ADSORBANT COMPRENANT UNE ETAPE DE MALAXAGE BASIQUE ET PROCEDE D'EXTRACTION DE LITHIUM A PARTIR DE SOLUTIONS SALINES UTILISANT LEDIT MATERIAU**
VERFAHREN ZUR HERSTELLUNG EINES ADSORPTIONSMATERIALS MIT EINEM GRUNDMISCHSCHRITT UND VERFAHREN ZUR EXTRAKTION VON LITHIUM AUS SALZLÖSUNGEN UNTER VERWENDUNG DES BESAGTEN MATERIALS
METHOD FOR PREPARING AN ADSORBENT MATERIAL COMPRISING A STEP OF BASIC MIXING, AND METHOD FOR EXTRACTING LITHIUM FROM SALINE SOLUTIONS USING SAID MATERIAL

(30) Priorité: 24.11.2015 FR 1561312
(43) Date de publication de la demande: 03.10.2018
(73) Titulaire: Eramet, 75015 Paris (FR); IFP Energies nouvelles, 92500 Rueil-Malmaison (FR)
(72) Inventeur: BOUALLEG, Malika, 69008 Lyon (FR); BURDET, Fabien, André, Pierre, 78370 Plaisir (FR); GOHIN, Morgan, Julien, Florian, 35350 Saint Méloir des Ondes (FR)
(74) Mandataire: Lavoix
(86) Numéro de dépôt international: PCT/EP2016/078715
(87) Numéro de publication internationale: WO 2017/089486

(56) Documents cités:
- WO-A1-2015/162272
- CN-A- 1 511 964
- FR-A1- 3 015 458
- US-A- 4 348 297
- US-B1- 8 753 594

## Description

### Domaine technique

La présente invention se rapporte au domaine des matériaux solides pour l'adsorption du lithium. En particulier, la présente invention se rapporte à un nouveau procédé de préparation d'un matériau solide cristallisé et mis en forme, de préférence sous forme d'extrudés, de formule LiXₓ.2Al(OH)₃,nH₂O avec n étant compris entre 0,01 et 10, x étant égal à 1 quand X est un anion choisi parmi les anions chlorure, hydroxyde et nitrate, et x étant égal à 0,5 quand X est un anion choisi parmi les anions sulfate et carbonate, comprenant une étape a) de précipitation de boehmite dans des conditions de température et de pH spécifiques, au moins une étape de mise en forme par extrusion basique, ledit procédé comprenant également une étape de traitement hydrothermal finale, l'ensemble des caractéristiques du procédé permettant permet d'augmenter la tenue mécanique et la capacité d'adsorption du lithium ainsi que la cinétique d'adsorption des matériaux obtenus par rapport aux matériaux de l'art antérieur lorsque celui-ci est utilisé dans un procédé d'extraction du lithium de solutions salines.

### Domaine technique

La présente description décrit également un procédé d'extraction du lithium à partir de solutions salines utilisant ledit matériau solide cristallisé de formule LiXₓ.2Al(OH)₃,nH₂O avec n, x et X ayant la définition précitée préparé selon le nouveau procédé de préparation selon l'invention.

### Art antérieur

Les ions lithium coexistent avec des quantités massives de métaux tels que par exemple les alcalins, les alcalino-terreux, le bore et les sulfates, en particulier dans des solutions salines telles que les saumures. Ainsi, ils doivent faire l'objet d'une extraction économique et sélective à partir de ces solutions salines. En effet, les propriétés chimiques du lithium et des métaux alcalins, de préférence le sodium (Na), et le potassium (K) et des alcalino-terreux, de préférence le magnésium (Mg), le calcium (Ca) et le strontium (Sr), rendent difficile la séparation de ces éléments.

Les matériaux solides de formule LiCl.2Al(OH)₃,nH₂O avec n étant compris entre 0,01 et 10 sont connus pour leur utilisation dans les phénomènes d'adsorption/désorption des ions lithium et en particulier dans les procédés d'extraction du lithium à partir de solutions salines. Ces structures peu stables permettraient l'intercalation d'atomes de lithium dans la structure et ainsi l'extraction du lithium.

Plusieurs protocoles opératoires conduisant à des solides susceptibles d'adsorber sélectivement le lithium ont été mis en évidence dans l'art antérieur. Dans tous les cas, un solide trihydroxyde d'aluminium Al(OH)₃, préparé ou commercial, est mis en contact avec un précurseur de lithium. Trois principaux précurseurs sont utilisés : le plus utilisé est le chlorure de lithium (LiCl). Un hydroxyde d'aluminium (LiOH) ou un carbonate de lithium (Li₂CO₃) peuvent également être mis en œuvre.

Le brevet US 6 280 693 décrit un procédé de préparation d'un solide LiCl/Al(OH)₃ par ajout d'une solution aqueuse de LiOH a une alumine hydratée polycristalline pour former du LiOH/Al(OH)₃, et ainsi créer des sites de lithium actifs dans les couches cristallines de l'alumine sans en altérer la structure. La transformation de LiOH/Al(OH)₃ en LiCl/Al(OH)₃ est ensuite réalisée par ajout d'acide chlorhydrique dilué. Les pastilles d'alumine ainsi préparées sont ensuite utilisées dans un procédé d'extraction du lithium à partir de saumures à haute température. Le procédé d'extraction du lithium décrit dans le brevet US 6 280 693 utilise le solide détaillé ci-dessus et comprend les étapes ci-après :
a) Saturation d'un lit de solide par une saumure contenant un sel de lithium LiX, X étant choisi parmi les halogénures, les nitrates, les sulfates et les bicarbonates,
b) Déplacement de la saumure imprégnée par une solution concentrée NaX,
c) Élution du sel LiX capté par le solide par passage d'une solution non saturée de LiX,
d) Déplacement de l'imprégnant par une solution concentrée de NaX, les étapes a) à d) sont ensuite répétées au moins une fois.

Le brevet RU 2 234 367 décrit un procédé de préparation d'un solide de formule LiCl.2Al(OH)₃,nH₂O comprenant une étape de mélange de trichlorure d'aluminium (AlCl₃) et de carbonate de lithium (Li₂CO₃) en présence d'eau à 40°C. Le résidu obtenu est filtré et lavé puis séché pendant 4 heures à 60°C. Le solide ainsi obtenu n'est pas mis en forme.

Le solide obtenu est utilisé pour l'extraction du lithium contenu dans des solutions salines par mise en contact avec de l'eau afin d'éliminer une partie du lithium puis par mise en contact avec une solution saline contenant du lithium. La capacité statique ainsi obtenue est comprise entre 6,0 et 8,0 mg de lithium par g de solide.

WO2015162272 divulgue un procédé de préparation d'un solide de formule LiCl.2Al(OH)₃, nH₂O comprenant une étape de mise en forme et une étape de traitement hydrothermal. Il divulgue également un procédé d'extraction du lithium à partir de solutions salines utilisant ledit matériau solide.

Le brevet CN1243112 décrit un procédé de préparation d'un solide de formule LiCl.2Al(OH)₃,nH₂O comprenant une étape de précipitation de microcristaux d'hydroxyde d'aluminium Al(OH)₃ par mise en contact d'AlCl₃ et d'hydroxyde de sodium NaOH, puis la mise en contact desdits microcristaux avec une solution à 6% de chlorure de lithium LiCl à 80°C pendant 2 heures suivie d'une filtration, d'un rinçage et d'un séchage pour obtenir une poudre de LiCl.2Al(OH)₃,nH₂O doté d'une structure non ordonnée et amorphe. Une solution d'un polymère macromoléculaire choisie parmi les résines fluorées, le chlorure de polyvinyle (PVC), le chlorure de polyvinyle chloré (CPVC), le perchlorate d'éthylène et l'acétate-butyrates de cellulose (CAB) faisant office de liant est ensuite mélangée à la poudre de LiCl.2Al(OH)₃,nH₂O pour obtenir une pâte qui est ensuite mise en forme par granulation suivie d'un séchage à l'air.

L'utilisation d'un tel solide dans un procédé d'extraction du lithium des saumures de lacs salés permet d'obtenir un faible rapport Mg/Li et une liqueur mère riche en lithium et conforme aux normes de production de carbonates ou de chlorures de lithium.

### Art antérieur

La présente description concerne la fourniture d'un matériau solide permettant l'extraction sélective de lithium à partir de saumure, ledit matériau solide étant de bonne qualité, sans défaut apparent et présentant une bonne cohésion et une bonne tenue mécanique lorsque celui-ci est mis au contact d'une solution saumure ou dans l'eau.

Un objectif de la présente invention est de fournir un nouveau procédé de préparation d'un tel matériau solide.

La présente description concerne également la fourniture d'un procédé d'extraction du lithium de solutions salines utilisant ledit matériau solide.

La présente description concerne en outre la fourniture d'un matériau solide pour la mise en œuvre d'un procédé d'extraction de lithium de solutions salines, dans lequel le matériau solide permet de limiter la génération de particules fines non désirées. En effet, les particules fines augmentent la perte de charge, favorise la création de chemins préférentiels et augmentent le taux de renouvellement du matériau lors du passage de la saumure au travers d'un lit d'un matériau au sein d'une colonne.

Les demandeurs ont découvert un nouveau procédé de préparation d'un matériau solide cristallisé de formule LiXₓ.2Al(OH)₃,nH₂O avec n étant compris entre 0,01 et 10, x étant égal à 1 quand X est un anion choisi parmi les anions chlorure, hydroxyde et nitrate, et x étant égal à 0,5 quand X est un anion choisi parmi les anions sulfate et carbonate, comprenant une combinaison d'étape spécifique et en particulier que le fait de réaliser à la fois l'étape a) de précipitation de boehmite dans des conditions de température et de pH spécifiques, l'étape de mise en forme d'une pâte, par malaxage-extrusion en présence d'une base, après une étape de séchage opérant dans des conditions spécifiques, puis de réaliser une étape de traitement hydrothermal finale des matériaux mis en forme permet d'obtenir un matériau solide cristallisé de formule LiXₓ.2Al(OH)₃,nH₂O sans défaut apparent présentant à la fois, une bonne cohésion, une bonne tenue mécanique du matériau lorsque celui-ci est mis au contact d'une solution saumure ou dans l'eau et présentant une capacité d'adsorption du lithium ainsi qu'une cinétique d'adsorption améliorée par rapport aux matériaux de l'art antérieur lorsque celui-ci est utilisé dans un procédé d'extraction du lithium de solutions salines.

Sans être lié à une quelconque théorie, les demandeurs ont mis en évidence que la mise en œuvre de l'étape a) de précipitation dans les conditions opératoires de températures et de pH telles que définies permet l'obtention d'un précipité de boehmite composée de cristallites de faible taille. En particulier, le précipité de boehmite obtenu présente une taille, obtenue par la formule de Scherrer en diffraction des rayons X selon les directions cristallographiques [020] et [120] est respectivement comprise entre 0,5 et 10 nm et entre 0,5 et 15 nm et de préférence respectivement comprise entre 0,5 à 2 nm et entre 0,5 à 3 nm et de manière très préférée respectivement entre 0,5 et 1,5 et entre 0,5 et 2,5.

La formule de Scherrer est une formule utilisée en diffraction des rayons X sur des poudres ou échantillons polycristallins qui relie la largeur à mi-hauteur des pics de diffraction à la taille des cristallites. Elle est décrite en détail dans la référence : Appl. Cryst. (1978). 11, 102-113 Scherrer after sixty years: A survey and some new results in the détermination of crystallite size, J. I. Langford and A. J. C. Wilson.

Le procédé selon l'invention permet ainsi l'obtention d'un matériau final solide cristallisé de formule LiXₓ.2Al(OH)₃,nH₂O avec n étant compris entre 0,01 et 10, x ayant la définition précitée également peu cristallisé mais présentant une capacité d'adsorption du lithium ainsi qu'une cinétique d'adsorption améliorée par rapport aux matériaux de l'art antérieur lorsque celui-ci est utilisé dans un procédé d'extraction du lithium de solutions salines.

Par ailleurs, la mise en œuvre d'une étape de mise en forme par extrusion en présence d'une base utilisée dans des quantités spécifiques permet l'obtention d'un matériau final présentant une bonne cohésion, ainsi qu'une bonne tenue mécanique lorsque celui-ci est mis au contact d'une solution saumure ou dans l'eau.

### Résumé et intérêt de l'invention

On entend de préférence par « matériau de formule LiXₓ.2Al(OH)₃,nH₂O» un matériau comprenant essentiellement ou consistant d'une phase cristallisée de formule LiXₓ.2Al(OH)₃,nH₂O, n, x et X ayant la définition précitée.

La présente invention a pour objet un procédé de préparation d'un matériau solide cristallisé de formule LiXₓ.2Al(OH)₃,nH₂O avec n étant compris entre 0,01 et 10, x étant égal à 1 quand X est un anion choisi parmi les anions chlorure, hydroxyde et nitrate, et x étant égal à 0,5 quand X est un anion choisi parmi les anions sulfate et carbonate, ledit procédé comprenant au moins les étapes suivantes :
a) une étape de précipitation de la boehmite, en milieu aqueux, d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique, et l'acide nitrique, dans laquelle au moins l'un des précurseurs basique ou acide comprend de l'aluminium, pour obtenir une suspension de boehmite, ladite étape a) opérant à une température comprise entre 5 et 35°C, et la quantité du précurseur basique étant choisie de manière à obtenir un pH de fin de précipitation dans le milieu réactionnel compris entre 7,5 et 9,5,
b) une étape de filtration et de lavage du précipité de boehmite obtenu à l'étape a),
c) une étape de mise en contact du précipité obtenu à l'étape b) avec au moins une source de lithium,
d) une étape de filtration de la suspension obtenue à l'étape c) pour obtenir une pâte,
e) une étape de séchage de la pâte obtenue à l'issue de l'étape d) à une température comprise entre 20 et 80°C pendant une durée de préférence comprise entre 1h et 20h,
f) une étape de mise en forme de ladite pâte séchée par malaxage extrusion basique dans laquelle ladite pâte séchée issue de l'étape e) est malaxée en présence d'une quantité de base comprise entre 0,5 et 3 % poids par rapport à la matière sèche, la matière sèche étant la masse de ladite pâte issue de l'étape e), séchée en étuve à 200°C pendant 6h, ladite base étant choisie parmi les bases inorganiques et les bases organiques en solution, et dans laquelle ladite pâte est ensuite soumise à une étape d'extrusion,
g) une étape de traitement hydrothermal du matériau mis en forme séché obtenu à l'issue de l'étape f), à une température comprise entre 50 et 200°C et pendant une durée de préférence comprise entre 30 min et 12 heures.

Un avantage du procédé de préparation selon l'invention est de permettre l'obtention d'un matériau solide cristallisé mis en forme, de préférence sous forme d'extrudés, de formule LiXₓ.2Al(OH)₃,nH₂O avec n, x et X ayant la définition précitée, de bonne qualité, sans défaut apparent, et présentant une bonne cohésion ainsi qu'une tenue mécanique améliorée lorsque celui-ci est mis au contact d'une solution saumure ou d'une solution diluée et de préférence dans l'eau.

Un autre avantage de la présente invention est de fournir un procédé de préparation d'un matériau solide cristallisé mis en forme, de préférence sous forme d'extrudés, de formule LiXₓ.2Al(OH)₃,nH₂O avec n, x et X ayant la définition précitée, présentant une capacité d'adsorption du lithium ainsi qu'une cinétique d'adsorption améliorée par rapport aux matériaux de l'art antérieur lorsque celui-ci est utilisé dans un procédé d'extraction du lithium de solutions salines.

La capacité d'adsorption du matériau précitée est définie par la quantité de lithium adsorbé, pour une solution donnée. Elle est calculée par l'homme du métier en intégrant la quantité de lithium fixée à partir d'une courbe de perçage dite aussi courbe de fuite ou courbe de saturation. L'intégration est réalisée sur le volume par la différence de concentration en lithium entre une solution après son chargement sur le matériau précité et la concentration théorique sans chargement. Cette quantité de matière peut être rapportée à la quantité de matériau utilisée pour obtenir une capacité en milligrammes de lithium par gramme de solide sec.

La cinétique d'adsorption du matériau précité est mesurée par l'homme du métier en étudiant la forme d'une courbe de perçage dite aussi courbe de fuite ou courbe de saturation. Cette courbe est obtenue au moyen d'une colonne remplie avec le matériau adsorbant pour former un lit homogène, en faisant percoler une solution saline contenant du lithium et en mesurant la concentration en lithium à la sortie du lit d'adsorbant en fonction du volume de solution utilisé pour un débit donné.

Par capacité d'adsorption améliorée par rapport aux matériaux de l'art antérieur, on entend une capacité d'adsorption supérieure à 4,5 mg de Li/g de matériau solide sec.

On entend par matériau solide sec, un matériau solide séché à 200 °C pendant 6 h.

Par « mis en forme », on entend que le matériau est solide et présente une cohésion suffisante lorsque le solide est mis au contact d'une solution de saumure pour qu'il ne perde sensiblement pas son intégrité physique, c'est-à-dire qu'il conserve sensiblement sa mise en forme. Plus précisément, un solide mis en forme au sens de l'invention couvre un solide conservant sa cohésion dans les conditions d'extraction de lithium définies dans les exemples.

La cohésion ainsi que la résistance mécanique du matériau mis en forme, de préférence par extrusion, préparés selon l'invention sont testées lors de la réalisation des courbes de perçage dites aussi courbes de fuite ou courbes de saturation. Un solide présentant une bonne résistance mécanique ne produit pas de fines particules et permet d'opérer la colonne sans observation de colmatage. Un solide présentant une mauvaise résistance mécanique produit des fines particules qui induisent un colmatage de la colonne.

La cohésion ainsi que la résistance mécanique du matériau mis en forme, de préférence par extrusion, préparés selon l'invention sont aussi testées par l'intermédiaire d'un protocole de vieillissement accéléré sur table d'agitation, soit dans une saumure, soit dans l'eau.

La table d'agitation est animée d'un mouvement unidirectionnel horizontal d'amplitude 4 cm à une vitesse de 190 mouvements par minute. Les solides mis en forme sont ainsi agités pendant une durée totale de 330 h.

A l'issue de ces 330 h, le mélange solide mis en forme-saumure ou eau est tamisé à l'aide d'une grille de maille 315 µm. Puis les solides mis en forme restant sur le tamis sont lavés avec le milieu utilisé pendant l'agitation. La fraction liquide ainsi obtenue, contenant de fines particules solides (diamètre inférieur à 315 µm) en suspension, est filtrée à l'aide d'un Büchner équipé d'un papier filtre dont les pores ont une dimension de 0,45 µm. Le gâteau formé par l'agglomération des fines particules est lavé avec de l'eau déminéralisée. Le résidu solide ainsi obtenu est séché en étuve à 200°C pendant 6h.

Le rapport de la masse de résidu solide sur la masse de solides mis en forme initiale est alors calculé, donnant accès à un pourcentage de destruction des solides mis en forme.

Le pourcentage de destruction des matériaux préparés selon l'invention permet d'apprécier la cohésion desdits matériaux.

Une bonne cohésion est notamment obtenue pour les matériaux dont le pourcentage de destruction est inférieur à 60%, et de préférence inférieur à 50%, lorsque ceux-ci sont mis au contact d'une solution de saumure ou de toutes autres solutions diluées et en particulier de l'eau.

Les matériaux préparés selon l'invention présentent par ailleurs une tenue mécanique améliorée par rapport aux matériaux de l'art antérieur.

Par « tenue mécanique améliorée », on entend que les matériaux préparés selon l'invention présentent un pourcentage de destruction, lorsqu'ils sont mis au contact d'une solution de saumure ou de toutes autres solutions diluées et en particulier de l'eau, inférieur à 30% et de préférence inférieur à 20%.

Un autre avantage du procédé de préparation selon l'invention est de permettre l'obtention d'un matériau solide cristallisé mis en forme, de préférence sous forme d'extrudés, de formule LiXₓ.2Al(OH)₃,nH₂O avec n, x et X ayant la définition précitée présentant pas ou peu de fissures qui pourraient provoquer un gonflement néfaste à la cohésion et à la tenue mécanique du matériau lorsque celui-ci est mis au contact d'une solution saumure ou d'une solution diluée et de préférence dans l'eau.

### Résumé et intérêt de l'invention

La présente description mentionne également un procédé d'extraction du lithium de solutions salines utilisant ledit matériau solide cristallisé mis en forme de formule LiXₓ.2Al(OH)₃,nH₂O avec n étant compris entre 0,01 et 10, x étant égal à 1 quand X est un anion choisi parmi les anions chlorure, hydroxyde et nitrate, et x étant égal à 0,5 quand X est un anion choisi parmi les anions sulfate et carbonate, préparé selon le nouveau procédé de préparation selon l'invention, pour l'extraction de lithium de solutions salines.

Un avantage du procédé d'extraction est de permettre l'extraction sélective du lithium à partir d'une solution saline et d'obtenir ainsi un facteur d'épuration élevé par rapport à la solution saline initiale, calculé comme étant le rapport X/Li qui est égal au rapport molaire de concentrations X/Li dans la solution saline initiale divisé par le rapport molaire de concentrations X/Li dans la solution finale, X étant choisi parmi le sodium (Na), le potassium (K), le magnésium (Mg), le calcium (Ca), le bore (B), le soufre (S) et le strontium (Sr).

La présente description décrit également un matériau solide cristallisé de formule LiXₓ.2Al(OH)₃,nH₂O avec n étant compris entre 0,01 et 10, x étant égal à 1 quand X est un anion choisi parmi les anions chlorure, hydroxyde et nitrate, et x étant égal à 0,5 quand X est un anion choisi parmi les anions sulfate et carbonate, de préférence sous forme d'extrudés, susceptible d'être obtenu selon un procédé de l'invention.

La présente description traite également d'un dispositif d'extraction de lithium de solution(s) saline(s). Ce dispositif met ainsi en oeuvre le procédé d'extraction.

### Description de l'invention

Conformément à l'invention, le procédé comprend une étape a) de précipitation de la boehmite, en milieu réactionnel aqueux, d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le trichlorure d'aluminium, le nitrate d'aluminium, l'acide sulfurique, l'acide chlorhydrique, et l'acide nitrique, dans laquelle au moins l'un des précurseurs basique ou acide comprend de l'aluminium, pour obtenir une suspension de boehmite, ladite étape a) opérant à une température comprise entre 5 et 35°C, et la quantité du précurseur basique étant choisie de manière à obtenir un pH de fin de précipitation dans le milieu réactionnel compris entre 7,5 et 9,5.

Le mélange dans le milieu réactionnel aqueux d'au moins un précurseur basique et d'au moins un précurseur acide nécessite soit, qu'au moins le précurseur basique ou le précurseur acide comprenne de l'aluminium, soit que les deux précurseurs basique et acide comprennent de l'aluminium.

De préférence, le précurseur basique est l'hydroxyde de sodium (NaOH).

De préférence, le précurseur acide est le trichlorure d'aluminium (AlCl₃).

De préférence, le ou les précurseur(s) basique(s) et acide(s) sont ajoutés dans ladite première étape de précipitation a) en solutions aqueuse.

De préférence, le milieu réactionnel aqueux est de l'eau.

De préférence, ladite étape a) opère sous agitation.

De préférence, ladite étape a) de précipitation de la boehmite est mise en œuvre à une température comprise entre 5 et 30°C, et de manière préférée entre 10 et 30°C et de manière très préférée entre 10 et 25°C, et la quantité du précurseur basique étant choisie de manière à obtenir un pH de fin de précipitation dans le milieu réactionnel compris entre 7,5 et 9 et de manière préférée entre 7,7 et 8,8.

De préférence l'étape a) de précipitation est mise en œuvre pendant une durée comprise entre 10 minutes et 5 heures, de préférence entre 15 minutes et 2 heures.

Ladite étape a) de précipitation permet l'obtention d'une suspension de boehmite précipitée ou oxyhydroxyde d'aluminium (AlOOH).

La mise en œuvre de l'étape a) de précipitation dans les conditions opératoires de températures et de pH telles que définies permet l'obtention d'un précipité de boehmite présentant des cristallites de faible taille. On entend par cristallites de faible taille, un précipité de boehmite composée de cristallites dont la taille, obtenue par la formule de Scherrer en diffraction des rayons X selon les directions cristallographiques [020] et [120] est respectivement comprise entre 0,5 et 10 nm et entre 0,5 et 15 nm et de préférence respectivement comprise entre 0,5 à 2 nm et entre 0,5 à 3 nm et de manière très préférée respectivement entre 0,5 et 1,5 nm et entre 0,5 et 2,5 nm.

Conformément à l'invention, le procédé comprend une étape b) de filtration et de lavage du précipité de boehmite obtenu à l'issue de l'étape a).

De préférence ladite étape de lavage est une étape de lavage à l'eau.

Conformément à l'invention, le procédé comprend une étape c) de mise en contact du précipité de boehmite obtenu à l'étape b) avec au moins une source de lithium.

La ou les source(s) de lithium peu(ven)t être tout composé comprenant l'élément lithium et pouvant libérer cet élément en solution aqueuse sous forme réactive. De préférence, la ou les source(s) de lithium est (sont) choisie(s) parmi les sels de lithium et de manière préférée parmi le chlorure de lithium (LiCl), l'hydroxyde de lithium (LiOH), le nitrate de lithium (LiNO₃), le sulfate de lithium (Li₂SO₄) et le carbonate de lithium (Li₂CO₃), pris seuls ou en mélange.

De manière très préférée, la source de lithium est le chlorure de lithium (LiCl). Dans ce cas, X est l'anion chlorure et x=1.

De préférence, le précipité de boehmite obtenu à l'étape b) et au moins une source de lithium sont mélangées en présence d'eau pour obtenir une suspension dans l'étape c). De préférence, ladite étape c) de mélange est mise en œuvre sous agitation vigoureuse.

De préférence, ladite étape c) de mise en contact est réalisée à une température comprise entre 20 et 95° C et de préférence comprise entre 50 et 95°C, et de manière préférée entre 70 et 95°C pendant une durée comprise entre 15 minutes et 12 heures et de préférence entre 30 minutes et 5 heures.

Conformément à l'invention, la suspension obtenue à l'issue de l'étape c) subit une étape d) de filtration pour obtenir une pâte.

Conformément à l'invention, la pâte obtenue à l'issue de l'étape d) est séchée dans une étape e) de séchage de préférence à une température comprise de préférence entre 20 et 80°C et de manière préférée entre 30 et 80°C, pendant une durée de préférence comprise entre 1h et 20 h, de manière préférée entre 1 et 12h et de manière plus préférée entre 1 et 10h.

De préférence, ladite étape de séchage est mise en œuvre, en étuve, sans étape de broyage suivant ladite étape de séchage en étuve.

Les conditions opératoires de ladite étape e) de séchage permettent l'obtention d'une pâte séchée présentant une perte au feu (PAF) comprise entre 20 et 75% et de préférence entre 20 et 70%. La perte au feu obtenue permet la mise en forme, de préférence par extrusion, de la pâte séchée dans de bonnes conditions et l'obtention de matériaux mis en forme, de préférence sous forme d'extrudés, résistants et sans défaut apparent, c'est à dire sans fissure.

De manière à déterminer la PAF avant l'étape de mise en forme, une partie de la pâte obtenue est prélevée et mise à l'étuve à 200°C. La PAF est obtenue par différence entre la masse de l'échantillon avant et après passage à l'étuve.

Conformément à l'invention, ladite pâte séchée obtenue à l'issue de l'étape e) de séchage subit une étape f) de mise en forme par malaxage extrusion basique dans laquelle ladite pâte séchée issue de l'étape e) est malaxée en présence d'une quantité de base comprise entre 0,5 et 3 % poids par rapport à la matière sèche, la matière sèche étant la masse de ladite pâte issue de l'étape e), séchée en étuve à 200°C pendant 6h ladite base étant choisie parmi les bases inorganiques et les bases organiques en solution, et dans laquelle ladite pâte est ensuite soumise à une étape d'extrusion.

On entend par étape de malaxage - extrusion, une étape dans laquelle la pâte séchée obtenue à l'issue de l'étape e) de séchage subit dans une première étape de malaxage, selon l'invention, en présence d'une base, puis la pâte est ensuite soumise à une étape d'extrusion par exemple par passage à travers une filière, à l'aide par exemple, d'un piston ou d'une extrudeuse continue double vis ou monovis. Le diamètre de la filière de l'extrudeuse est avantageusement variable et est compris entre 0,5 et 5 mm, de préférence entre 0,5 et 3 mm et de manière préférée entre 0,5 et 2 mm. La forme de la filière, et par conséquent, la forme du matériau obtenu sous forme d'extrudé, est avantageusement cylindrique, trilobée, quadrilobée ou bien multilobée.

Ladite étape f) de mise en forme par malaxage - extrusion est avantageusement réalisée de manière connue de l'Homme du métier.

Ladite étape f) de mise en forme par malaxage - extrusion et en particulier ladite étape de malaxage peut éventuellement être réalisée en présence d'un liant ou en l'absence de liant.

De préférence, ladite pâte séchée obtenue à l'issue de l'étape e) de séchage, et éventuellement au moins un liant, ainsi que la base dans le cas ou ceux-ci sont présents, sont mélangés, de préférence en une seule fois, dans un malaxeur. Le malaxeur est avantageusement choisi parmi les malaxeurs batch, de préférence à bras à cames ou à bras en Z, ou bien à l'aide d'un malaxeur-mélangeur bi-vis. Les conditions de malaxage sont ajustées de manière connue de l'Homme du métier et visent à obtenir une pâte homogène et extrudable.

Dans les procédés de malaxage - extrusion connus de l'Homme du métier, l'extrudabilité de la pâte peut éventuellement avantageusement être ajustée avec l'ajout de l'eau afin d'obtenir une pâte adaptée à la réalisation de l'étape f) de mise en forme par extrusion.

De préférence, ladite pâte séchée est malaxée en présence d'une quantité de base comprise entre 0,5 et 2,5 % poids par rapport par rapport à la matière sèche, la matière sèche étant la masse de ladite pâte issue de l'étape e), séchée en étuve à 200°C pendant 6h.

Dans le cas où la quantité de base ajoutée est supérieure à 3%poids, les performances du solides en adsorption sont fortement dégradées.

De préférence, les bases inorganiques sont choisies parmi la soude, la potasse, et l'ammoniaque, et les bases organiques en solution sont choisies parmi les amines et les composés ammonium quaternaire. De manière préférée les bases organiques en solution sont choisies parmi les alkyl-éthanol amines et les alkyl- amines éthoxylées. Les bases organiques sont de préférence utilisées en solution dans l'eau.

De manière très préférée, ladite base est l'ammoniaque et de préférence l'ammoniaque en solution aqueuse (NH₄OH).

De préférence, aucun acide n'est ajouté dans l'étape f) de mise en forme par malaxage extrusion.

Dans le cas ou ladite étape f) de mise en forme par malaxage - extrusion et en particulier ladite étape de malaxage est réalisée en présence d'un liant, ledit liant est avantageusement choisi parmi les liants organiques ou inorganiques.

Ledit ou lesdits liant(s) organique(s) qui peuvent être utilisés dans ladite étape f) de mise en forme sont avantageusement choisi(s) parmi les paraffines, et les polymères, pris seul ou en mélange.

De préférence, ledit ou lesdits liant(s) organique(s) sont choisi(s) parmi la polyvinylpyrrolidone (PVP), l'alcool polyvinylique (PVA), une dispersion aqueuse d'un mélange de cires de paraffine et de polyéthylène comme par exemple le Cerfobol R75, les polysaccharides, le méthylcellulose, l'hydroxypropylméthylcellulose, l'hydroxyéthylcellulose et le carboxymethylcellulose et pris seul ou en mélange, de préférence parmi la polyvinylpyrrolidone (PVP), l'alcool polyvinylique (PVA) et le Cerfobol R75 et de manière préférée parmi la polyvinylpyrrolidone (PVP) et l'alcool polyvinylique (PVA).

Un liant organique très préféré est la polyvinylpyrrolidone (PVP).

Le Cerfobol R75 comprend 28,4% de masse organique paraffine sèche diluée dans une phase aqueuse.

La proportion dudit ou desdits liant(s) organique(s) ajoutée(s) dans ladite étape f) de mise en forme est avantageusement comprise entre 0,5 et 20% en masse, de préférence entre 0,5 et 15% en masse, de manière préférée entre 1 et 13% en masse, par rapport à la masse totale de pâte sèche à mettre en forme.

L'addition d'au moins un liant organique dans ladite étape facilite la mise en forme par extrusion de l'étape f) du procédé selon l'invention.

L'addition d'au moins un liant organique dans ladite étape f) permet également l'obtention d'un matériau solide cristallisé sous forme d'extrudés présentant une résistance sous agitation améliorée au contact de la saumure ou de l'eau.

De préférence, ledit ou lesdits liant(s) inorganique(s) utilisés dans ladite étape f) de mise en forme sont avantageusement choisi(s) parmi les liants siliciques, les liants de type argile et les liants inorganiques susceptibles d'être générés dans les conditions de ladite étape e) par ajout de précurseurs de liants inorganiques.

De préférence, ledit ou lesdits liant(s) inorganique(s) utilisés dans ladite étape f) de mise en forme sont avantageusement choisi(s) parmi les liants siliciques.

De préférence, les liants siliciques sont avantageusement choisis parmi la silice de précipitation et la silice issue de sous-produits comme les cendres volantes telle que par exemple les particules silico-alumineuses ou silico-calciques, l'acide silicique, le métasilicate de sodium et les fumées de silice. La silice colloïdale, se présentant par exemple sous la forme d'une suspension stabilisée, telles que par exemple les produits commerciaux tels que le Ludox^{®} ou les Klebosol^{®} peut également être utilisée.

De manière préférée, le liant silicique est sous forme amorphe ou cristalline. De manière très préférée, la silice est utilisée sous forme de poudre ou sous forme colloïdale.

La proportion dudit ou desdits liant(s) inorganique(s) ajoutée(s) dans ladite étape f) de mise en forme est avantageusement comprise entre 0,5 et 20 en masse, de préférence entre 0,5 et 15% en masse, de manière préférée entre 1 et 13% en masse, par rapport à la masse totale de pâte sèche à mettre en forme.

L'addition d'au moins un liant inorganique dans ladite étape f) facilite sa mise en forme par extrusion.

L'addition d'au moins un liant inorganique dans ladite étape f) permet également l'obtention d'un matériau solide cristallisé mis en forme, de préférence sous forme d'extrudés présentant une résistance sous agitation améliorée au contact de la saumure.

De préférence, le matériau mis en forme par extrusion obtenus à l'issue de l'étape f) subi(ssen)t une étape optionnelle de séchage à une température comprise entre 20 et 200°C pendant une durée de préférence comprise entre 1 heure et 20 heures, pour obtenir le matériau solide cristallisé de formule LiXₓ.2Al(OH)₃,nH₂O mis en forme, sous forme d'extrudés.

De préférence, ladite étape de séchage est mise en œuvre à une température comprise entre 20 et 100°C, de manière préférée entre 20 et 80°C et de manière très préférée entre 20 et 60°C, de préférence pendant une durée de préférence comprise entre 1 et 18 heures, de préférence entre 5 et 14 heures et de manière préférée entre 8 et 14 heures.

Les conditions spécifiques de ladite étape de séchage permettent l'obtention d'un matériau solide cristallisé présentant la phase LiXₓ.2Al(OH)₃,nH₂O désirée.

Ladite étape de séchage est avantageusement réalisée selon les techniques connues de l'Homme du métier et de préférence en étuve.

Conformément à l'invention, le matériau mis en forme par extrusion et éventuellement séché obtenu(s) à l'issue de l'étape f) est (sont) soumis à une étape g) de traitement hydrothermal à une température comprise entre 50 et 200°C et pendant une durée de préférence comprise entre 30 min et 12 heures.

De préférence, ladite étape g) est mise en œuvre à une température comprise entre 70 et 200°C, de manière préférée entre 70 et 180°C, et de manière très préférée entre 80 et 150°C, par exemple pendant une durée comprise entre 30 minutes et 120 heures.

Ladite étape g) de traitement hydrothermal est avantageusement réalisée selon une technique connue de l'homme du métier.

Selon un mode de réalisation préféré, ladite étape g) est réalisée en autoclave, sous pression autogène et sous une atmosphère saturée en eau. De préférence, ladite étape h) est réalisée en introduisant un liquide au fond de l'autoclave, ledit liquide étant choisi parmi l'eau, seule ou en mélange avec au moins un acide, une base ou un sel de lithium. De préférence, le matériau mis en forme et séché, et de préférence les extrudés obtenu(s) à l'issue de l'étape f) ne sont pas en contact avec le liquide au fond de l'autoclave.

Dans le cas où de l'eau est introduite dans l'autoclave en mélange avec un acide, l'acide est avantageusement choisi parmi l'acide nitrique, l'acide chlorhydrique, l'acide sulfurique et l'acide carboxylique.

Dans le cas où de l'eau est introduite dans l'autoclave en mélange avec une base, la base est avantageusement choisie parmi l'hydroxyde de lithium, l'hydroxyde de sodium, l'hydroxyde de potassium et l'ammoniaque.

Dans le cas où de l'eau est introduite dans l'autoclave en mélange avec un sel de lithium, le sel de lithium est avantageusement choisi parmi le chlorure de lithium et le carbonate de lithium.

De préférence, ladite étape g) est mise en œuvre en présence d'une atmosphère humide comprenant une teneur en eau comprise entre 5 et 50% masse, et de préférence entre 5 et 45% en masse, et de préférence entre 5 et 40% masse.

Selon un mode de réalisation, ladite étape g) peut être réalisée en étuve climatique, en présence d'un flux d'air humide contenant entre 5 et 50% masse d'eau de préférence entre 5 et 45% masse et de manière préférée entre 4 et 40% masse d'eau, ou dans un four opérant sous un flux d'air humide contenant entre 5 et 50% masse d'eau de préférence entre 5 et 45% masse et de manière préférée entre 5 et 40% masse d'eau selon les méthodes connues de l'Homme du métier.

L'étape g) de traitement hydrothermal en atmosphère contrôlée permet l'obtention d'un matériau solide cristallisé de formule LiXₓ.2Al(OH)₃,nH₂O avec n étant compris entre 0,01 et 10, x étant égal à 1 quand X est un anion choisi parmi les anions chlorure, hydroxyde et nitrate, et x étant égal à 0,5 quand X est un anion choisi parmi les anions sulfate et carbonate mis en forme de préférence sous forme d'extrudés, présentant une bonne tenue et une bonne résistance mécanique lorsque celui-ci est placé au contact d'une saumure ou d'une solution diluée et de préférence de l'eau.

A l'issue de ladite étape g), le matériau mis en forme de préférence sous forme d'extrudés obtenu est ensuite avantageusement récupéré et peut éventuellement être lavé.

Ledit matériau mis en forme par extrusion obtenu à l'issue de l'étape g) peut ensuite éventuellement être soumis à une étape de séchage h), ladite étape de séchage opérant de préférence à une température comprise entre 15 et 50°C pendant une durée de préférence comprise entre 1h et 12 heures pour obtenir le matériau solide cristallisé de formule LiXₓ.2Al(OH)₃,nH₂O avec n étant compris entre 0,01 et 10, x étant égal à 1 quand X est un anion choisi parmi les anions chlorure, hydroxyde et nitrate, et x étant égal à 0,5 quand X est un anion choisi parmi les anions sulfate et carbonate mis en forme.

Ladite étape h) de séchage est avantageusement réalisée selon les techniques connues de l'Homme du métier, et de préférence en étuve.

Le procédé selon la présente invention permet donc l'obtention d'un matériau solide cristallisé de formule LiXₓ.2Al(OH)₃,nH₂O avec n étant compris entre 0,01 et 10, de préférence entre 0,1 et 5 et de manière préférée entre 0,1 et 1, x étant égal à 1 quand X est un anion choisi parmi les anions chlorure, hydroxyde et nitrate, et x étant égal à 0,5 quand X est un anion choisi parmi les anions sulfate et carbonate, de préférence sous forme d'extrudés de section ou diamètre compris entre 0,2 et 5 mm, de préférence entre 0,3 et 4 mm, de manière préférée entre 0,3 et 3 mm, de manière très préférée entre 0,3 et 2 mm et de manière encore plus préférée entre 0,3 et 1,8 mm.

Les meilleurs résultats en terme de tenue mécanique et de cohésion du matériau solide cristallisé obtenus selon le procédé de préparation selon l'invention sont obtenus dans le cas d'extrudés de section ou diamètre compris entre 0,2 et 5 mm et de préférence compris entre 0,3 et 1,8 mm, lesdits extrudés ayant été obtenus grâce à la combinaison d'une étape de mise en forme spécifique telle que décrite ci-dessus et d'une étape de séchage i) finale réalisée à une température comprise entre 20 et 200°C, de préférence comprise entre 20 et 60°C, pendant une durée de préférence comprise entre 1 et 20 heures, de préférence comprise entre 5 et 14 heures, de préférence entre 8 et 14 heures et en particulier pendant 8 heures.

Le matériau solide cristallisé de formule LiXₓ.2Al(OH)₃,nH₂O mis en forme, par extrusion et préparé selon l'enchainement des étapes a) à h) du procédé de préparation selon l'invention peut être caractérisé selon les techniques suivantes : l'adsorption d'azote pour la détermination de la surface spécifique selon la méthode BET; la diffractométrie de rayons X, dans le domaine d'angle de diffraction 2Θ = 0,8 à 40° ± 0,02° en géométrie de réflexion pour identifier la structure dudit matériau et l'analyse élémentaire.

Le matériau solide cristallisé de formule LiXₓ.2Al(OH)₃,nH₂O mis en forme, de préférence sous forme d'extrudés, présente avantageusement une surface spécifique mesurée selon la méthode BET comprise entre 1 et 30 m²/g et de préférence entre 1 et 20 m²/g.

Le diagramme de diffraction de rayon X du matériau sous forme d'extrudés correspond à un solide cristallisé de formule LiXₓ.2Al(OH)₃,nH₂O selon la fiche JCPDS n° 0031-07-00, avec n étant compris entre 0,01 et 10, de préférence entre 0,1 et 0,5 de manière préférée entre 0,1 et 5 et de manière très préférée entre 0,1 et 1, obtenu selon l'invention, mis en forme, avantageusement sous forme d'extrudés.

Le procédé de préparation selon la présente invention permet donc l'obtention d'un matériau solide cristallisé de formule LiXₓ.2Al(OH)₃,nH₂O, n, x et X ayant la définition précitée mis en forme de préférence sous forme d'extrudés, présentant à la fois une surface spécifique BET faible, une bonne cohésion, et n'ayant pas de défaut apparent et présentant une bonne tenue et une bonne résistance mécanique lorsque celui-ci est placé au contact d'une saumure ou d'une solution diluée et de préférence dans l'eau.

Les bonnes propriétés du matériau obtenu résultent de l'effet combiné de mise en forme de préférence par extrusion d'une pâte, en l'absence de liant, directement, après une étape de séchage opérant dans des conditions spécifiques, de la mise en œuvre d'une étape de séchage suivant la mise en forme, opérant également dans des conditions spécifiques et également de la mise en œuvre d'une étape de traitement hydrothermal final opérant de préférence en autoclave.

Par ailleurs, le matériau solide cristallisé mis en forme par extrusion ainsi obtenu de formule LiXₓ.2Al(OH)₃,nH₂O avec n, x et X ayant la définition précitée, présente une capacité d'adsorption du lithium ainsi qu'une cinétique d'adsorption améliorée par rapport aux matériaux de l'art antérieur lorsque celui-ci est utilisé dans un procédé d'extraction du lithium de solutions salines.

Les matériaux obtenus selon l'invention présentent une capacité d'adsorption améliorée par rapport aux matériaux de l'art antérieur supérieure à 4,5 mg de Li/g de matériau solide sec, c'est-à-dire de matériau solide séché à 200 °C, de préférence comprise entre 4,5 et 10 mg de Li/g, de manière préférée entre 4,5 et 8 et de manière très préférée entre 4,5 et 7 mg de Li/g de matériau solide sec.

### Description de l'invention

La présente description mentionne également un procédé d'extraction du lithium à partir d'une solution saline utilisant ledit matériau solide cristallisé de formule LiXₓ.2Al(OH)₃,nH₂O avec n étant compris entre 0,01 et 10, x étant égal à 1 quand X est un anion choisi parmi les anions chlorure, hydroxyde et nitrate, et x étant égal à 0,5 quand X est un anion choisi parmi les anions sulfate et carbonate, préparé selon l'invention.

Ladite solution saline utilisée dans le procédé d'extraction comprend avantageusement une concentration en lithium comprise entre 0,001 mol/L et 0,5 mol/L, de préférence entre 0,02 mol/L et 0,3 mol/L.

Ladite solution saline contient également d'autres espèces, telles que par exemple les espèces choisies parmi la liste suivante : Na, K, Rb, Cs, Mg, Ca, Sr, Ba, F, Cl, Br, I, SO₄, CO₃, NO₃, et HCO₃. Ladite solution saline peut avantageusement être saturée en sels ou non.

Ladite solution saline peut être toute solution saline naturelle, concentrée ou issue d'un procédé d'extraction ou de transformation du lithium. Par exemple, ladite solution saline utilisée dans le procédé d'extraction peut avantageusement être choisie parmi les saumures de lacs salés ou de sources géothermales, les saumures soumises à une évaporation pour obtenir des saumures concentrées en lithium, l'eau de mer, les effluents des usines de production de cathodes, ou de production de chlorure ou d'hydroxyde de lithium et les effluents des procédé d'extraction du lithium à partir de minéraux.

Le procédé d'extraction du lithium est de préférence un procédé d'extraction sélective du lithium. En effet, il permet la séparation du lithium des métaux alcalins, de préférence le sodium (Na), et le potassium (K) et des alcalino-terreux, de préférence le magnésium (Mg), le calcium (Ca) et le strontium (Sr), présents en quantité massive dans les solutions salines traitées dans ledit procédé d'extraction.

Le procédé d'extraction du lithium permet également la séparation sélective du lithium des autres composés tels que le bore et les sulfates.

Le procédé d'extraction du lithium est avantageusement mis en œuvre dans une unité comprenant au moins une colonne, la ou lesdites colonnes comprenant au moins un lit dudit matériau solide cristallisé de formule LiXₓ.2Al(OH)₃,nH₂O, avec n, x et X ayant la définition précitée, mis en forme et préparé selon le procédé de préparation selon l'invention.

De préférence, ledit procédé d'extraction du lithium est mis en œuvre dans une unité comprenant au moins deux colonnes, et de manière préférée entre deux et trois colonnes, comprenant au moins un lit du matériau solide cristallisé de formule LiXₓ.2Al(OH)₃,nH₂O, avec n, x et X ayant la définition précitée.

Ledit procédé d'extraction du lithium comprend avantageusement au moins les étapes suivantes :
- une étape d'activation dudit matériau solide cristallisé de formule LiXₓ.2Al(OH)₃,nH₂O, avec n, x et X ayant la définition précitée,
- une étape de chargement dudit matériau activé par adsorption réalisée par passage de ladite solution saline sur ledit matériau activé,
- éventuellement au moins une étape de lavage de la solution saline imprégnant ledit matériau par passage d'une solution de lavage sur ledit matériau,
- une étape de désorption du lithium réalisée par passage d'eau ou d'une solution aqueuse de sel de lithium sur ledit matériau pour obtenir un éluat comprenant au moins du lithium.

De préférence, le procédé d'extraction du lithium comprend une étape préalable de mise en colonne dudit matériau.

De préférence, ledit procédé d'extraction comprend une étape optionnelle de lavage de la solution saline imprégnant ledit matériau par passage d'une solution de lavage sur ledit matériau, ladite étape de lavage étant de préférence mise en œuvre entre l'étape de chargement et l'étape de désorption.

De préférence, ladite étape d'activation du matériau solide cristallisé de formule LiXₓ.2Al(OH)₃,nH₂O, avec n, x et X ayant la définition précitée, de préférence mis en forme, et de préférence sous forme d'extrudés, est réalisée une seule fois lors de la mise en colonne du matériau synthétisé et mis en forme selon le procédé de préparation selon l'invention.

Ladite étape d'activation permet d'activer les sites destinés à adsorber sélectivement le lithium.

De préférence, ladite étape d'activation est avantageusement réalisée par le passage d'une solution d'activation choisi parmi l'eau et une solution de sel de lithium ayant une concentration comprise entre 0,001 mol/L et 0,1 mol/L, de préférence entre 0,001 mol/L et 0,05 mol/L et de manière préférée entre 0,01 et 0,04 mol/L.

De manière préférée, le sel de lithium utilisé en solution dans ladite étape d'activation est choisi parmi le chlorure de lithium (LiCl), le nitrate de lithium et le bromure de lithium.

De manière très préférée, le sel de lithium utilisé en solution dans ladite étape d'activation est le chlorure de lithium (LiCl).

Ladite étape d'activation est avantageusement réalisée à une température comprise entre 0°C et 90°C, et de préférence entre 10°C et 60°C, et de manière préférée entre 10°C et 30°C avec un temps de séjour de ladite solution d'activation dans la colonne de préférence compris entre 0,03 et 10 h, et de préférence entre 0,06 et 1 h.

La quantité de solution nécessaire à l'activation est avantageusement comprise entre 1 et 30 volumes de colonne, de préférence entre 2 et 20 volumes de colonne.

Le volume de colonne ou « Bed Volume » selon la terminologie anglo-saxonne est également appelé volume occupé par le lit du solide dans la colonne ou BV selon la terminologie propre au domaine technique connu de l'Homme du métier.

Ledit matériau solide cristallisé peut éventuellement subir préalablement l'étape d'activation une étape de lavage avec une solution de lavage et de préférence une solution de chlorure de lithium (LiCl) ou un mélange de chlorure de lithium (LiCl) et de chlorure de sodium (NaCl).

Ladite étape de chargement dudit matériau activé par adsorption est avantageusement réalisée par passage de la solution saline traitée dans le procédé d'extraction, sur ledit matériau activé.

Ladite étape de chargement est avantageusement effectuée à une température comprise entre 0°C et 90°C, et de préférence entre 10°C et 70°C avec un temps de séjour de ladite solution, de préférence de ladite solution saline traitée, dans la colonne de préférence compris entre 0,03 et 10 h, et de préférence entre 0,06 et 1 h.

La quantité de solution nécessaire pour saturer ledit matériau dépend de la capacité d'adsorption dudit matériau et de la concentration en lithium de la solution saline.

La capacité d'adsorption des matériaux est supérieure à 4,5 mg de Li/g de matériau solide sec, de préférence comprise entre 4,5 et 10 mg de Li/g, de manière préférée entre 4,5 et 8 et de manière très préférée entre 4,5 et 7 mg de Li/g de matériau solide sec.

Dans le cas où ledit procédé d'extraction du lithium est mis en œuvre dans une unité comprenant deux colonnes, la première colonne est avantageusement saturée par le lithium lors de ladite étape de chargement. La deuxième colonne, recevant le flux de sortie de la première colonne, est avantageusement chargée jusqu'à l'obtention d'une fuite en lithium ne dépassant pas 10% de la concentration en lithium du flux d'entrée et de préférence 5%, permettant ainsi de maximiser le rendement de récupération en lithium.

Dans le cas où ledit procédé d'extraction du lithium est mis en œuvre dans une unité comprenant trois colonnes, la troisième colonne, déjà saturée en lithium, est consacrée aux étapes de lavage puis de désorption du lithium, décrites ci-après, pendant le chargement des deux autres colonnes.

La première fraction du flux de sortie de ladite étape de chargement par adsorption, avantageusement entre 0 et 1 volumes de colonne, correspond à l'élimination de l'imprégnant issu de l'étape d'activation du matériau solide. Cette fraction peut être considérée comme un effluent ou recyclée, et de préférence recyclée comme flux d'entrée de l'étape de désorption. Dans le cas du traitement d'une saumure naturelle ou d'eau de mer, au-delà de 1 volume de colonne, l'intégralité du flux de sortie de ladite étape de chargement par adsorption, appelé ci-après raffinat qui n'a subi aucun traitement chimique, est avantageusement et de préférence renvoyé vers le gisement de solution saline d'origine.

A l'issue de l'étape de chargement par passage de la solution saline traitée dans le procédé sur le matériau activé, la solution saline imprègne ledit matériau activé.

La solution saline imprégnant le matériau activé est éventuellement lavée dans au moins une étape de lavage par passage d'une solution de lavage sur ledit matériau.

Ladite ou lesdites étape(s) de lavage de la solution saline imprégnant ledit matériau, est (sont) avantageusement réalisée(s) par passage ascendant ou descendant d'une solution de lavage sur ledit matériau, et de préférence descendant.

De préférence, ladite solution de lavage est choisie parmi l'eau et une solution aqueuse de sel de sodium et de préférence de chlorure de sodium (NaCl), comprenant éventuellement un sel de lithium et de préférence le chlorure de lithium (LiCl), ladite solution présentant avantageusement une concentration en sel de sodium et de préférence en chlorure de sodium (NaCl), supérieure à 0,5 mol/L, de préférence comprise entre 1 mol/L et la saturation et une concentration en sel de lithium et de préférence en chlorure de lithium (LiCl), comprise entre 0 mol/L et 2 mol/L.

Selon un mode de réalisation préféré, ladite solution saline imprégnant le matériau activé subit une étape finale de lavage par passage d'une solution de lavage aqueuse de chlorure de sodium (NaCl) comprenant éventuellement du chlorure de lithium (LiCl), sur ledit matériau.

Ladite étape de lavage est avantageusement réalisée à une température comprise entre 0°C et 90°C, et de préférence entre 10°C et 70°C, et avec un temps de séjour de ladite solution, de préférence de ladite solution de lavage dans la colonne compris entre 0,03 et 10 h, et de préférence entre 0,06 et 1 h. La quantité de solution nécessaire au lavage est comprise entre 0,1 et 10 volumes de colonne, et de préférence dans la gamme 0,5 à 5 volumes de colonne.

Le flux de sortie de ladite étape de lavage est considéré comme un effluent ou est avantageusement recyclé, et de préférence recyclé à l'entrée de l'étape de chargement ou directement à l'entrée de la deuxième colonne dans le cas où ledit procédé d'extraction du lithium est mis en œuvre dans une unité comprenant au moins deux colonnes.

Ladite étape de lavage permet le lavage de la solution saline imprégnée dans ledit matériau lors de l'étape de chargement dudit matériau par adsorption, tout en limitant la désorption du lithium.

Dans le cas où ladite solution de lavage est une solution aqueuse concentrée de chlorure de sodium (NaCl), ladite étape de lavage permet non seulement d'éliminer la solution saline imprégnée dans ledit matériau lors de l'étape de chargement dudit matériau par adsorption mais aussi de désorber les éléments tels que le bore, les sulfates, les alcalins autres que le lithium et le sodium et les alcalino-terreux.

L'étape de désorption du lithium est ensuite réalisée par passage d'eau ou d'une solution aqueuse de chlorure de lithium (LiCl) sur ledit matériau à l'issue de l'étape de lavage pour obtenir un éluat comprenant au moins du lithium.

De préférence, ladite étape de désorption est réalisée par passage ascendant ou descendant, et de préférence descendant, d'une solution de désorption choisie parmi l'eau et une solution de chlorure de lithium (LiCl) contenant de 0,001 mol/L à 2 mol/L de LiCl, et de préférence de 0,01 mol/L à 1 mol/L.

Ladite étape de désorption est avantageusement réalisée à une température comprise entre 0°C et 90°C, et de préférence entre 10°C et 70°C à avec un temps de séjour de ladite solution de désorption dans la colonne de préférence compris entre 0,03 et 10 h, et de préférence entre 0,06 et 1 h.

La quantité de solution de chlorure de lithium (LiCl) nécessaire à la désorption est avantageusement comprise entre 0,01 et 10 volumes de colonne, et de préférence entre 0,05 et 5 volumes de colonne.

Le flux de sortie de ladite étape de désorption du lithium génère le produit final du procédé, appelé éluat.

L'éluat est avantageusement récupéré entre 0 et 4 volumes de colonne, et de préférence entre 0,2 et 3 volumes de colonne.

L'ensemble des autres fractions du flux de sortie de cette étape ne constituant pas le produit final appelé éluat, est considéré comme un effluent ou est avantageusement recyclé, et de préférence recyclé à l'entrée de l'étape de chargement, de lavage ou d'élution.

L'éluat obtenu à l'issue du procédé d'extraction est une solution contenant majoritairement les éléments Li, Na et Cl ainsi que des impuretés de préférence choisies parmi K, Mg, Ca, Sr, B ou SO₄.

L'éluat est ensuite avantageusement concentré et purifié pour obtenir un sel de lithium de haute pureté.

Ledit procédé d'extraction du lithium permet l'extraction sélective du lithium à partir d'une solution saline et permet ainsi d'obtenir un facteur d'épuration élevé par rapport à la solution saline initiale, calculé comme étant le rapport X/Li qui est égal au rapport molaire de concentration X/Li dans la solution saline initiale divisé par le rapport molaire de concentration X/Li dans l'éluat, X étant choisi parmi le sodium (Na), le potassium (K), le magnésium (Mg), le calcium (Ca), le bore (B), le soufre (S) et le strontium (Sr).

La présente description concerne également un dispositif d'extraction de lithium caractérisé en ce qu'il comprend une unité comprenant au moins une colonne, ladite colonne comprenant au moins une garniture comprenant le matériau solide cristallisé de formule LiXₓ.2Al(OH)₃,nH₂O avec n étant compris entre 0,01 et 10, x étant égal à 1 quand X est un anion choisi parmi les anions chlorure, hydroxyde et nitrate, et x étant égal à 0,5 quand X est un anion choisi parmi les anions sulfate et carbonate, tel que préparé selon le procédé selon l'invention.

Plus particulièrement, le dispositif met en œuvre le procédé d'extraction de lithium décrit ci-dessus. Encore plus précisément, le dispositif comprend des unités ou moyens mettant en œuvre les différentes étapes du procédé d'extraction de lithium.

Par « selon l'invention » ou des termes équivalents, on entend couvrir tout mode de réalisation, variante, caractéristique avantageuse ou préférée, pris seul ou selon l'une quelconque de leurs combinaisons, sans aucune limitation.

### Description des figures :

La figure 1 représente le diagramme de diffraction des rayons X du matériau solide de formule LiXx.2Al(OH)3,nH2O avec X=Cl , x=1 et n étant compris entre 0,01 et 10 obtenu sous forme d'extrudés dans l'exemples 2 selon l'invention.
La figure 2 représente le diagramme de diffraction des rayons X du matériau solide de formule LiXx.2Al(OH)3,nH2O avec X=Cl , x=1 et n étant compris entre 0,01 et 10 obtenus sous forme d'extrudés dans l'exemples 6 non conforme à l'invention.
La figure 3 illustre les courbes de saturation obtenues pour chacun des extrudés obtenus dans les exemples 1, 2, 3, 5 et 6.

L'invention est illustrée par les exemples suivants qui ne présentent, en aucun cas, un caractère limitatif.

### Exemples:

### Exemple 1 : (non conforme) :

On prépare un matériau solide de formule LiCl.2Al(OH)₃,nH₂O avec n étant compris entre 0,01 et 1, selon un procédé de synthèse non conforme à l'invention, en ce que l'étape de synthèse Al(OH)₃ est réalisée à pH= 10,5

### 1/ Synthèse Al(OH)₃

Dans un bêcher refroidi par un bain de glace pour assurer une température de 25 C, une solution contenant 326 ml d'eau permutée et 135,6 g de chlorure d'aluminium hexahydraté (AlCl₃) est préparée. Ensuite sous agitation magnétique, de l'hydroxyde de sodium (NaOH) est ajouté lentement jusqu'à atteindre pH de 10,5. Ce gâteau est mis en suspension dans un bêcher de 3 L avec 320 mL d'eau.

La DRX du précipité montre que le précipité obtenu dans l'exemple 1 est bien un précipité de boehmite. Le précipité de boehmite obtenu dans l'exemple 1 est cristallisé.

### 2/ Addition du chlorure de lithium LiCl.

On prépare une solution contenant 78,5g de chlorure de lithium LiCl fourni par la société Prolabo et 1326 ml d'eau qui est additionnée au gâteau repulpé. Ce milieu réactionnel est agité et chauffé à 80°C pendant 2 h.

Une filtration puis un séchage en étuve à 80°C pendant 8 h suivent les 2 premières étapes.

### 3/ Malaxage extrusion

L'étape de mise en forme est réalisée par malaxage puis extrusion. Pour l'étape de malaxage, 35,5g de pâte obtenues ci-dessus, est introduit dans un malaxeur de type Brabender (volume cuve 80ml) avec 1,39g de solution ammoniacale à 20,18% poids ce qui correspond à 1% poids de base (NH₄OH) par rapport à la matière sèche, la matière sèche étant la masse de ladite pâte issue du séchage précédent, séchée en étuve à 200°C pendant 6h. La solution ammoniacale est mélangée avec 16g d'eau déminéralisée et est ajoutée en 2 minutes sous un malaxage à 50 tours/min. Un complément d'eau d'environ 2,7g est ajouté afin d'obtenir une pâte cohésive, homogène et extrudable. Le malaxage est poursuivi à la même vitesse pendant 30 minutes après la fin de l'ajout de l'ammoniaque et de l'eau.

La pâte obtenue est mise en forme à l'aide d'une extrudeuse piston (MTS), équipée d'une filière cylindrique de 1 mm de diamètre.

Les extrudés obtenus sont ensuite soumis à une étape de traitement hydrothermal en autoclave comprenant de l'eau. 10 g d'extrudés sont placés dans un panier placé dans un autoclave de 500ml. Dans le fond de l'autoclave sont mis 20 g d'eau distillée. Les extrudés ne sont pas en contact avec le liquide au fond de l'autoclave.

Le traitement hydrothermal est opéré à une température de 100 °C pendant 6 h sous une atmosphère saturée en eau.

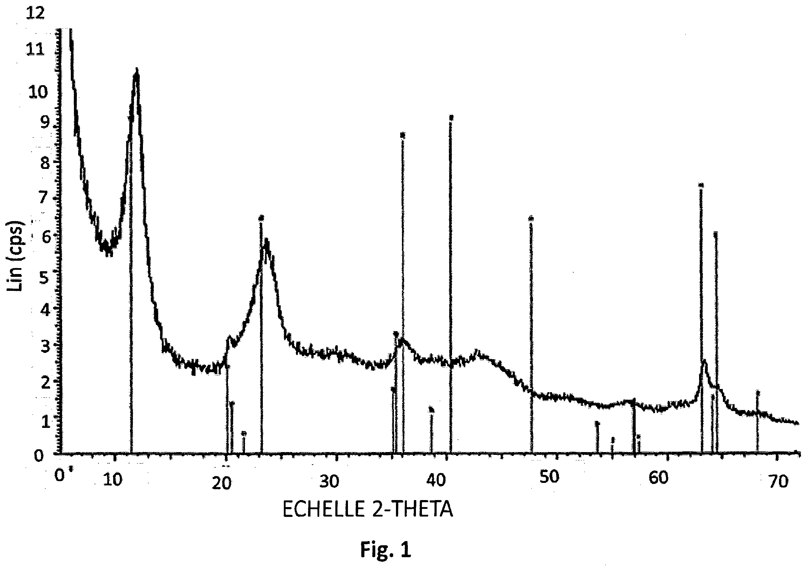

Des extrudés du matériau solide de formule LiCl.2Al(OH)₃,nH₂O avec n = 0,25 présentant une bonne cohésion et un aspect correct sont obtenus. Une phase LiCl.2Al(OH)₃,nH₂O est détectée sur le diagramme de diffraction des rayons X des extrudés du matériau solide de formule LiCl.2Al(OH)₃,nH₂O avec n = 0,25 obtenu à l'exemple 1 (figure 1).

Les extrudés obtenus sont également caractérisés par les mesures suivantes :
L'analyse élémentaire montre une bonne stœchiométrie Li/Al/Cl correspondant à la composition d'une structure LiCl.2Al(OH)₃,nH₂O
Al= 21,2 % masse ; Li= 4,2 % masse ; Cl;= 19 % masse.

Les extrudés obtenus présentent une surface spécifique : S_{BET} = 4 m²/g.

Les extrudés obtenus selon l'exemple 1 présentent visuellement une bonne cohésion, ne présentent pas ou peu de fissures et présentent à la fois une très bonne cohésion et une très bonne tenue mécanique lorsque ceux-ci sont mis au contact d'une saumure (pourcentage de destruction inférieur à 17% lors du test de cohésion) ou d'eau (pourcentage de destruction inférieur à 24% lors du test de cohésion).

### Exemple 2 : (selon l'invention) :

On prépare un matériau solide de formule LiCl.2Al(OH)₃,nH₂O avec n étant compris entre 0,01 et 1, selon un procédé de synthèse conforme à l'invention, dans lequel l'étape de mise en forme est mise en œuvre par extrusion directe, sans liant.

### 1/ Précipitation de boehmite AlOOH

Dans un bêcher refroidit par un bain de glace, une solution contenant 326 ml d'eau permutée et 135,6 g de chlorure d'aluminium hexahydraté (AlCl₃) est préparée. Ensuite sous agitation magnétique, 67,5 g d'hydroxyde de sodium (NaOH) sont ajoutés pendant 30 minutes de manière à ajuster le pH. Le pH atteint en fin de synthèse est de 8. La température est maintenue à 20°C pendant toute la durée de l'étape de précipitation. La suspension obtenue est filtrée puis lavée à l'eau. Le gâteau est mis en suspension dans un bêcher de 3 L avec 320 mL d'eau.

Un échantillon du précipité obtenu est prélevé du milieu réactionnel. La DRX du précipité montre que le précipité obtenu dans l'exemple 2 est bien un précipité de boehmite. Le précipité de boehmite obtenu dans l'exemple 2 est peu cristallisé.

### 2/ Addition du chlorure de lithium LiCl.

On prépare une solution contenant 78,5g de chlorure de lithium LiCl fourni par la société Prolabo et 1326 ml d'eau qui est additionnée au gâteau repulpé. Ce milieu réactionnel est agité et chauffé à 80°C pendant 2 h.

Une filtration puis un séchage en étuve à 80°C pendant 8h suivent les 2 premières étapes.

### 3/ Malaxage extrusion

L'étape de mise en forme est réalisée par malaxage puis extrusion. Pour l'étape de malaxage, 35,5g de pâte obtenues ci-dessus, est introduit dans un malaxeur de type Brabender (volume cuve 80ml) avec 1,39g de solution ammoniacale à 20,18% poids ce qui correspond à 1% poids de base (NH₄OH) par rapport à la matière sèche, la matière sèche étant la masse de ladite pâte issue du séchage précédent, séchée en étuve à 200°C pendant 6h. La solution ammoniacale est mélangée avec 16g d'eau déminéralisée et est ajoutée en 2 minutes sous un malaxage à 50 tours/min. Un complément d'eau d'environ 2,7g est ajouté afin d'obtenir une pâte cohésive, homogène et extrudable. Le malaxage est poursuivi à la même vitesse pendant 30 minutes après la fin de l'ajout de l'ammoniaque et de l'eau.

La pâte obtenue est mise en forme à l'aide d'une extrudeuse piston (MTS), équipée d'une filière cylindrique de 1 mm de diamètre.

Les extrudés obtenus sont ensuite soumis à une étape de traitement hydrothermal en autoclave comprenant de l'eau. 10 g d'extrudés sont placés dans un panier placé dans un autoclave de 500ml. Dans le fond de l'autoclave sont mis 20 g d'eau distillée. Les extrudés ne sont pas en contact avec le liquide au fond de l'autoclave.

Le traitement hydrothermal est opéré à une température de 100 °C pendant 6 h sous une atmosphère saturée en eau.

Des extrudés du matériau solide de formule LiCl.2Al(OH)₃,nH₂O avec n = 0,25 présentant une bonne cohésion et un aspect correct sont obtenus. Une phase LiCl.2Al(OH)₃,nH₂O est détectée sur le diagramme de diffraction des rayons X des extrudés du matériau solide de formule LiCl.2Al(OH)₃,nH₂O avec n = 0,25 obtenu à l'exemple 2 (figure 1).

Les extrudés obtenus sont également caractérisés par les mesures suivantes :
L'analyse élémentaire montre une bonne stœchiométrie Li/Al/Cl correspondant à la composition d'une structure LiCl.2Al(OH)₃,nH₂O
Al= 21,2 % masse ; Li= 4,2 % masse ; Cl;= 19 % masse.

Les extrudés obtenus présentent une surface spécifique : S_{BET} = 3 m²/g.

Les extrudés obtenus selon l'exemple 2 présentent visuellement une bonne cohésion, ne présentent pas ou peu de fissures et présentent à la fois une très bonne cohésion et une très bonne tenue mécanique lorsque ceux-ci sont mis au contact d'une saumure (pourcentage de destruction inférieur à 15% lors du test de cohésion) ou d'eau (pourcentage de destruction inférieur à 20% lors du test de cohésion).

### Exemple 3 : (comparatif : extrusion directe sans malaxage basique) :

On prépare un matériau solide de formule LiCl.2Al(OH)₃,nH₂O avec n étant compris entre 0,01 et 1, selon un procédé de synthèse conforme à l'invention, dans lequel l'étape de mise en forme est mise en œuvre par extrusion directe, sans malaxage basique.

### 1/ Précipitation de boehmite AlOOH

Dans un bêcher refroidit par un bain de glace, une solution contenant 326 ml d'eau permutée et 135,6 g de chlorure d'aluminium hexahydraté (AlCl₃) est préparée. Ensuite sous agitation magnétique, 67,5 g d'hydroxyde de sodium (NaOH) sont ajoutés pendant 30 minutes de manière à ajuster le pH. Le pH atteint en fin de synthèse est de 8. La température est maintenue à 20°C pendant toute la durée de l'étape de précipitation. La suspension obtenue est filtrée puis lavée à l'eau. Le gâteau est mis en suspension dans un bêcher de 3 L avec 320 mL d'eau.

Un échantillon du précipité obtenu est prélevé du milieu réactionnel. La DRX du précipité montre que le précipité obtenu dans l'exemple 3 est bien un précipité de boehmite. Le précipité de boehmite obtenu dans l'exemple 3 est peu cristallisé.

### 2/ Addition du chlorure de lithium LiCl.

On prépare une solution contenant 78,5g de chlorure de lithium LiCl fourni par la société Prolabo et 1326 ml d'eau qui est additionnée au gâteau repulpé. Ce milieu réactionnel est agité et chauffé à 80°C pendant 2 h.

Une filtration puis un séchage en étuve à 80°C pendant 8h suivent les 2 premières étapes.

Le matériau solide ainsi préparé ainsi préparé se caractérise par la formule LiCl.2Al(OH)₃,nH₂O avec n = 0,25 selon un procédé de synthèse conforme à l'invention. L'étape de mise en forme de la pâte obtenue est réalisée directement après l'étape de séchage, sans étape de malaxage préalable et en l'absence de liant.

La pâte obtenue est mise en forme à l'aide d'une extrudeuse piston (MTS), équipée d'une filière cylindrique de 1 mm de diamètre.

Les extrudés obtenus à l'issue de l'étape de mise en forme sont ensuite séchés en étuve à 40°C pendant 12h.

Les extrudés obtenus sont ensuite soumis à une étape de traitement hydrothermal en autoclave comprenant de l'eau. 10 g d'extrudés sont placés dans un panier placé dans un autoclave de 500ml. Dans le fond de l'autoclave sont mis 20 g d'eau distillée. Les extrudés ne sont pas en contact avec le liquide au fond de l'autoclave.

Le traitement hydrothermal est opéré à une température de 100 °C pendant 6 h sous une atmosphère saturée en eau.

Des extrudés du matériau solide de formule LiCl.2Al(OH)₃,nH₂O avec n = 0,25 présentant une bonne cohésion et un aspect correcte sont obtenus. Une phase LiCl.2Al(OH)₃,nH₂O est détectée sur le diagramme de diffraction des rayons X des extrudés du matériau solide de formule LiCl.2Al(OH)₃,nH₂O avec n = 0,25 (non fourni).

Les extrudés obtenus sont également caractérisés par les mesures suivantes :
L'analyse élémentaire montre une bonne stœchiométrie Li/Al/Cl correspondant à la composition d'une structure LiCl.2Al(OH)₃,nH₂O
Al= 20,00% masse ; Li= 4,03 % masse ; Cl;= 20,5 % masse, C=5,87 % masse.

Les extrudés obtenus présentent une surface spécifique : S_{BET} = 3 m²/g.

Les extrudés obtenus selon l'exemple 3 présentent visuellement une bonne cohésion, ne présentent pas ou peu de fissures. Cependant, lorsqu'ils sont soumis au test de résistance décrit ci-dessus, ils présentent une cohésion et une tenue mécanique moins bonnes que le matériau obtenu dans l'exemple 2 selon l'invention lorsque ceux-ci sont mis au contact d'une saumure (pourcentage de destruction environ de 35% lors du test de cohésion) ou d'eau (pourcentage de destruction environ de 45% lors du test de cohésion).

### Exemple 4 (comparatif malaxage acide puis basique):

On prépare un matériau solide de formule LiCl.2Al(OH)₃,nH₂O avec n étant compris entre 0,01 et 1, selon un procédé de synthèse conforme à l'invention, dans lequel l'étape de mise en forme est mise en œuvre par extrusion directe, sans liant.

### 1/ Précipitation de boehmite AlOOH

Dans un bêcher refroidit par un bain de glace, une solution contenant 326 ml d'eau permutée et 135,6 g de chlorure d'aluminium hexahydraté (AlCl₃) est préparée. Ensuite sous agitation magnétique, 67,5 g d'hydroxyde de sodium (NaOH) sont ajoutés pendant 30 minutes de manière à ajuster le pH. Le pH atteint en fin de synthèse est de 8. La température est maintenue à 20°C pendant toute la durée de l'étape de précipitation. La suspension obtenue est filtrée puis lavée à l'eau. Le gâteau est mis en suspension dans un bêcher de 3 L avec 320 mL d'eau.

Un échantillon du précipité obtenu est prélevé du milieu réactionnel. La DRX du précipité montre que le précipité obtenu est bien un précipité de boehmite. Le précipité de boehmite obtenu est peu cristallisé.

### 2/ Addition du chlorure de lithium LiCl.

On prépare une solution contenant 78,5g de chlorure de lithium LiCl fourni par la société Prolabo et 1326 ml d'eau qui est additionnée au gâteau repulpé. Ce milieu réactionnel est agité et chauffé à 80°C pendant 2 h.

Une filtration puis un séchage en étuve à 80°C pendant 8h suivent les 2 premières étapes.

La mise en forme de la pâte séchée obtenue est réalisée avec un taux d'acide total, exprimé par rapport à la pâte séchée de 1%_{poids}, et un taux de neutralisation de 20 %. Le malaxage est effectué sur malaxeur de type Brabender. La pâte séchée est introduite dans le malaxeur. On ajoute l'eau acidifiée avec de l'acide nitrique en 4 minutes, sous malaxage à 50 tours/min. Le malaxage acide est poursuivi pendant 10 minutes. Une étape de neutralisation est réalisée par ajout d'une solution ammoniacale et un malaxage pendant 3 minutes. Le malaxage est poursuivi à la même vitesse pendant 30 minutes après la fin de l'ajout de l'ammoniaque.

Aucune pâte cohésive n'a pu être obtenue.

Le solide mouillé obtenu est mise en forme à l'aide d'une extrudeuse piston (MTS), équipée d'une filière cylindrique de 1 mm de diamètre. Aucun extrudé intact n'a pu être obtenu.

Les joncs obtenus sont très friables et n'ont aucune tenue dans la saumure.

### Exemple 5 : (comparatif malaxage avec de l'eau puis extrusion) :

On prépare un matériau solide de formule LiCl.2Al(OH)₃,nH₂O avec n étant compris entre 0,01 et 1, selon un procédé de synthèse conforme à l'invention, dans lequel l'étape de mise en forme est mise en œuvre par extrusion directe, sans liant.

### 1/ Précipitation de boehmite AlOOH

Dans un bécher refroidit par un bain de glace, une solution contenant 326 ml d'eau permutée et 135,6 g de chlorure d'aluminium hexahydraté (AlCl₃) est préparée. Ensuite sous agitation magnétique, 67,5 g d'hydroxyde de sodium (NaOH) sont ajoutés pendant 30 minutes de manière à ajuster le pH. Le pH atteint en fin de synthèse est de 8. La température est maintenue à 20°C pendant toute la durée de l'étape de précipitation. La suspension obtenue est filtrée puis lavée à l'eau. Le gâteau est mis en suspension dans un bécher de 3 L avec 320 mL d'eau.

Un échantillon du précipité obtenu est prélevé du milieu réactionnel. La DRX (figure 1) du précipité montre que le précipité obtenu dans l'exemple 5 est bien un précipité de boehmite. Le précipité de boehmite obtenu dans l'exemple 5 est peu cristallisé.

### 2/ Addition du chlorure de lithium LiCl.

On prépare une solution contenant 78,5g de chlorure de lithium LiCl fourni par la société Prolabo et 1326 ml d'eau qui est additionnée au gâteau repulpé. Ce milieu réactionnel est agité et chauffé à 80°C pendant 2 h.

Une filtration puis un séchage en étuve à 80°C pendant 8h suivent les 2 premières étapes.

### 3/ Malaxage extrusion

L'étape de mise en forme est réalisée par malaxage puis extrusion. Pour l'étape de malaxage, 35,5g de pâte obtenues ci-dessus, est introduit dans un malaxeur de type Brabender (volume cuve 80ml). Aucun ajout de base n'est effectué. Un ajout d'environ 19 g d'eau déminéralisée est effectué en 2 minutes sous un malaxage à 50 tours/min. Le malaxage est poursuivi à la même vitesse pendant 30 minutes après la fin de l'ajout de l'eau.

La pâte obtenue est mise en forme à l'aide d'une extrudeuse piston (MTS), équipée d'une filière cylindrique de 1 mm de diamètre.

Les extrudés obtenus sont également caractérisés par les mesures suivantes :
L'analyse élémentaire montre une bonne stœchiométrie Li/Al/Cl correspondant à la composition d'une structure LiCl.2Al(OH)₃,nH₂O
Al= 20,00% masse ; Li= 4,03 % masse ; Cl= 20,5 % masse, C=5,87 % masse.

Les extrudés obtenus présentent une surface spécifique : S_{BET} = 3 m²/g.

Les extrudés obtenus selon l'exemple 5 présentent visuellement une bonne cohésion, ne présentent pas ou peu de fissures mais présentent une cohésion et une tenue mécanique moins bonnes lorsque ceux-ci sont mis au contact d'une saumure (pourcentage de destruction d'environ à 35% lors du test de cohésion) ou d'eau (pourcentage de destruction d'environ 45% lors du test de cohésion).

### Exemple 6 : (comparatif malaxage en présence de 4% d'ammoniaque,) :

On prépare un matériau solide de formule LiCl.2Al(OH)₃,nH₂O avec n étant compris entre 0,01 et 1, selon un procédé de synthèse conforme à l'invention, dans lequel l'étape de mise en forme est mise en œuvre par extrusion directe, sans liant.

### 1/ Précipitation de boehmite AlOOH

Dans un bécher refroidit par un bain de glace, une solution contenant 326 ml d'eau permutée et 135,6 g de chlorure d'aluminium hexahydraté (AlCl₃) est préparée. Ensuite sous agitation magnétique, 67,5 g d'hydroxyde de sodium (NaOH) sont ajoutés pendant 30 minutes de manière à ajuster le pH. Le pH atteint en fin de synthèse est de 8. La température est maintenue à 20°C pendant toute la durée de l'étape de précipitation. La suspension obtenue est filtrée puis lavée à l'eau. Le gâteau est mis en suspension dans un bécher de 3 L avec 320 mL d'eau.

Un échantillon du précipité obtenu est prélevé du milieu réactionnel. La DRX du précipité montre que le précipité obtenu dans l'exemple 6 est bien un précipité de boehmite. Le précipité de boehmite obtenu dans l'exemple 6 est peu cristallisé.

### 2/ Addition du chlorure de lithium LiCl.

On prépare une solution contenant 78,5g de chlorure de lithium LiCl fourni par la société Prolabo et 1326 ml d'eau qui est additionnée au gâteau repulpé. Ce milieu réactionnel est agité et chauffé à 80°C pendant 2 h.

Une filtration puis un séchage en étuve à 80°C pendant 8h suivent les 2 premières étapes.

### 3/ Malaxage extrusion

L'étape de mise en forme est réalisée par malaxage puis extrusion. Pour l'étape de malaxage, 35,5g de pâte obtenues ci-dessus, est introduit dans un malaxeur de type Brabender (volume cuve 80ml). avec 5,56 g de solution ammoniacale à 20,18% poids ce qui correspond à 4% poids de base (NH₃) par rapport à la matière sèche, la matière sèche étant la masse de ladite pâte issue du séchage précédent, séchée en étuve à 200°C pendant 6h. La solution ammoniacale est mélangée avec environ 12g d'eau déminéralisée et est ajoutée en 2 minutes sous un malaxage à 50 tours/min. Un complément d'eau d'environ 2,7g est ajouté afin d'obtenir une pâte cohésive, homogène et extrudable. Le malaxage est poursuivi à la même vitesse pendant 30 minutes après la fin de l'ajout de l'ammoniaque et de l'eau.

La pâte obtenue est mise en forme à l'aide d'une extrudeuse piston (MTS), équipée d'une filière cylindrique de 1 mm de diamètre.

Les extrudés obtenus sont ensuite soumis à une étape de traitement hydrothermal en autoclave comprenant de l'eau. 10 g d'extrudés sont placés dans un panier placé dans un autoclave de 500ml. Dans le fond de l'autoclave sont mis 20 g d'eau distillée. Les extrudés ne sont pas en contact avec le liquide au fond de l'autoclave.

Le traitement hydrothermal est opéré à une température de 100 °C pendant 6 h sous une atmosphère saturée en eau.

Des extrudés du matériau solide de formule LiCl.2Al(OH)₃,nH₂O avec n = 0,25 présentant une bonne cohésion et un aspect correcte sont obtenus.

Une phase LiCl.2Al(OH)₃,nH₂O est détectée sur le diagramme de diffraction des rayons X des extrudés du matériau solide de formule LiCl.2Al(OH)₃,nH₂O. Une raie supplémentaire qui correspond probablement à la phase (NH₄)Cl est également détectée.

Les extrudés obtenus sont également caractérisés par les mesures suivantes :
L'analyse élémentaire montre une bonne stœchiométrie Li/Al/Cl correspondant à la composition d'une structure LiCl.2Al(OH)₃,nH₂O
Al= 21,2 % masse ; Li= 4,2 % masse ; Cl;= 19 % masse.

Les extrudés obtenus présentent une surface spécifique : S_{BET} = 3 m²/g.

Les extrudés obtenus selon l'exemple 6 présentent visuellement une bonne cohésion, ne présentent pas ou peu de fissures et présentent à la fois une très bonne cohésion et une très bonne tenue mécanique lorsque ceux-ci sont mis au contact d'une saumure (pourcentage de destruction inférieur à 15% lors du test de cohésion) ou d'eau (pourcentage de destruction inférieur à 20% lors du test de cohésion).

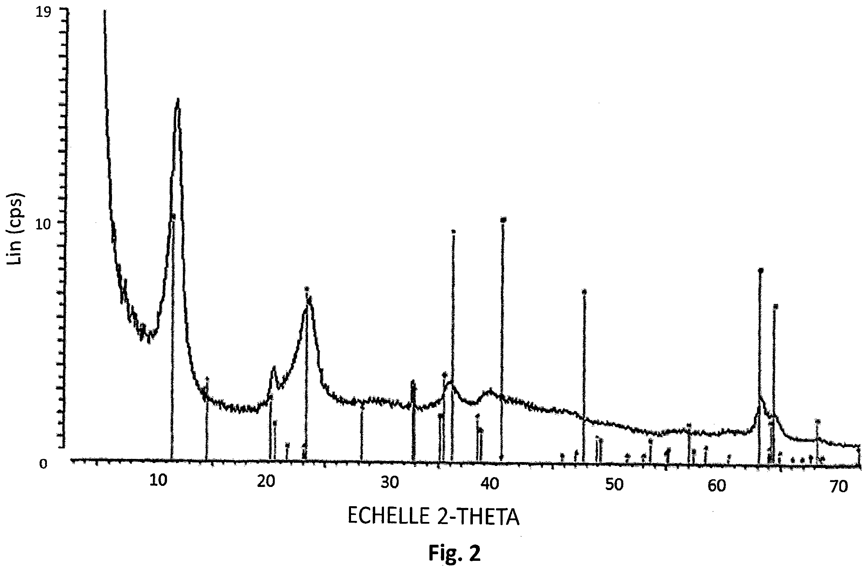

L'ajout de 4%pds de base conduit à un solide dont le spectre DRX (figure 2) est différent de celui obtenu pour l'exemple conforme à l'invention. Par ailleurs le solide lorsqu'il est introduit dans le procédé décrit ci-dessous présente des performances en adsorption inférieures à celles obtenue pour l'exemple conforme à l'invention.

### Exemple 7 : test de capacité d'adsorption et de cinétique d'adsorption.

La cinétique d'adsorption du lithium par les extrudés et leur capacité d'adsorption est testée par la réalisation d'une courbe de perçage dite aussi courbe de fuite ou courbe de saturation en colonne. Un courbe de saturation est réalisée pour chacun des extrudés obtenus dans les exemples 1 à 6 :
- 15 g de solide humide sont placés dans une colonne
- 10 volumes de colonne d'une solution saline de chlorure de lithium (LiCl) à 0,02 mol/L traverse la colonne en circuit fermé jusqu'à atteindre une concentration stable en lithium en solution
- Une solution naturelle contenant environ 0,06 mol/L de lithium traverse la colonne à un débit de 6 BV/h, c'est-à-dire six fois le volume occupé par le lit des extrudés en une heure.
- La concentration en lithium est mesurée en sortie de la colonne en fonction du volume de solution passé.
- La quantité de lithium adsorbée est calculée par intégration sur le volume de la différence entre la concentration de la solution d'alimentation et la concentration mesurée en sortie de la colonne. La capacité est ensuite calculée en divisant cette quantité de lithium adsorbée par la masse sèche de solide introduite dans la colonne.

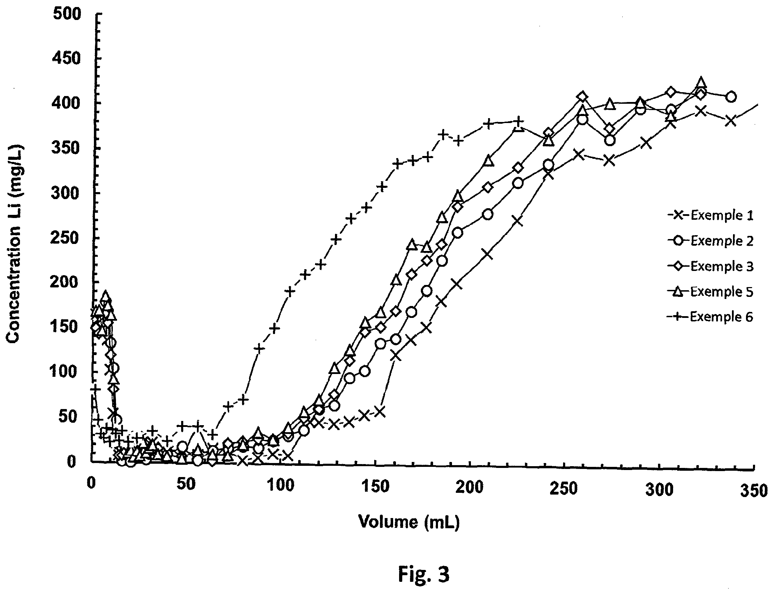

La figure 3 illustre les courbes de saturation obtenues pour chacun des extrudés obtenus dans les exemples 1, 2, 3, 5 et 6.

Les extrudés obtenus selon l'exemple 2 selon l'invention sont comparés à ceux obtenus dans l'exemple 1, 3, 5 et 6, obtenus selon des procédés de préparation non-conformes à l'invention. Aucun test n'a pu être effectué pour l'exemple 4 au vu des solides obtenus. Les extrudés de l'exemple 2 obtenus selon l'invention montrent en plus d'une tenue mécanique améliorée, une capacité d'adsorption du lithium importante. Leur capacité d'adsorption en lithium est 6,4 mg(Li)/g(solide sec), à comparer à 4,8 mg(Li)/g(solide sec) pour les solides obtenus selon l'exemple 6, selon un procédé de préparation non-conforme à l'invention. Les extrudés obtenus selon les exemples 3 et 5, selon des procédés non-conformes à l'invention, montrent une capacité équivalente aux extrudés obtenus selon l'exemple 2 selon l'invention. Les extrudés obtenus selon l'exemple 1, non-conformes montrent une capacité dégradée de 5,3 mg(Li)/g(solide sec).

## Revendications

1. Procédé de préparation d'un matériau solide cristallisé de formule LiXₓ.2Al(OH)₃,nH₂O avec n étant compris entre 0,01 et 10, x étant égal à 1 quand X est un anion choisi parmi les anions chlorure, hydroxyde et nitrate, et x étant égal à 0,5 quand X est un anion choisi parmi les anions sulfate et carbonate, ledit procédé comprenant au moins les étapes suivantes :
a) une étape de précipitation de la boehmite, en milieu aqueux, d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique, et l'acide nitrique, dans laquelle au moins l'un des précurseurs basique ou acide comprend de l'aluminium, pour obtenir une suspension de boehmite, ladite étape a) opérant à une température comprise entre 5 et 35°C, et la quantité du précurseur basique étant choisie de manière à obtenir un pH de fin de précipitation dans le milieu réactionnel compris entre 7,5 et 9,5,
b) une étape de filtration et de lavage du précipité de boehmite obtenu à l'étape a),
c) une étape de mise en contact du précipité obtenu à l'étape b) avec au moins une source de lithium,
d) une étape de filtration de la suspension obtenue à l'étape c) pour obtenir une pâte,
e) une étape de séchage de la pâte obtenue à l'issue de l'étape d) à une température comprise entre 20 et 80°C pendant une durée de préférence comprise entre 1h et 20h,
f) une étape de mise en forme de ladite pâte séchée par malaxage extrusion basique dans laquelle ladite pâte séchée issue de l'étape e) est malaxée en présence d'une quantité de base comprise entre 0,5 et 3 % poids par rapport à la matière sèche, la matière sèche étant la masse de ladite pâte issue de l'étape e), séchée en étuve à 200°C pendant 6h ladite base étant choisie parmi les bases inorganiques et les bases organiques en solution, et dans laquelle ladite pâte est ensuite soumise à une étape d'extrusion,
g) une étape de traitement hydrothermal du matériau mis en forme séché obtenu à l'issue de l'étape f), à une température comprise entre 50 et 200°C et pendant une durée de préférence comprise entre 30 min et 12 heures.

2. Procédé selon la revendication 1 dans lequel le précurseur basique est l'hydroxyde de sodium (NaOH).

3. Procédé selon l'une des revendications 1 ou 2 dans lequel le précurseur acide est le trichlorure d'aluminium (AlCl₃).

4. Procédé selon l'une des revendications 1 à 3 dans lequel ladite étape a) de précipitation de la boehmite est mise en oeuvre à une température comprise entre 10 et 25°C.

5. Procédé selon l'une des revendications 1 à 4 dans lequel la quantité du précurseur basique est choisie de manière à obtenir un pH de fin de précipitation de ladite étape a) dans le milieu réactionnel compris entre 7,7 et 8,8.

6. Procédé selon l'une des revendications 1 à 5 dans lequel la ou les source(s) de lithium est (sont) choisie(s) parmi le chlorure de lithium (LiCl), l'hydroxyde de lithium (LiOH) le nitrate de Lithium (LiNO₃), le sulfate de lithium (Li₂SO₄) et le carbonate de lithium (Li₂CO₃), pris seuls ou en mélange.

7. Procédé selon la revendication 6 dans lequel la source de lithium est le chlorure de lithium (LiCl).

8. Procédé selon l'une des revendications 1 à 7 dans lequel ladite étape f) de mise en forme est réalisée en présence d'ammoniaque.

9. Procédé selon la revendication 8 dans lequel ladite pâte séchée est malaxée en présence d'une quantité de base comprise entre 0,5 et 2,5% poids par rapport à la matière sèche, la matière sèche étant la masse de ladite pâte issue de l'étape e), séchée en étuve à 200°C pendant 6h dans ladite étape f) de mise en forme.

## Patentansprüche

1. Verfahren zur Herstellung eines festen kristallisierten Materials von Formel LiXₓ.2Al(OH)₃,nH₂O, wobei n zwischen 0,01 und 10 ist, x gleich 1 ist, wenn X ein Anion ist, das ausgewählt ist unter den Anionen Chlorid, Hydroxid und Nitrat, und x gleich 0,5 ist, wenn X ein Anion ist, das ausgewählt ist unter den Anionen Sulfat und Carbonat, das Verfahren umfassend mindestens die folgenden Schritte:
a) einen Präzipitationsschritt des Böhmits in einem wässrigen Medium aus mindestens einem basischen Vorläufer, ausgewählt aus Natriumaluminat, Kaliumaluminat, Ammoniak, Natriumhydroxid und Kaliumhydroxid, und aus mindestens einem sauren Vorläufer, ausgewählt aus Aluminiumsulfat, Aluminiumchlorid, Aluminiumnitrat, Schwefelsäure, Salzsäure, und Salpetersäure, wobei mindestens einer von dem basischen oder dem sauren Vorläufer Aluminium umfasst, um eine Böhmit-Suspension zu erlangen, wobei der Schritt a) bei einer Temperatur zwischen 5 und 35 °C betrieben wird und die Menge des basischen Vorläufers gewählt ist, um einen pH am Präzipitationsende in dem Reaktionsmedium zwischen 7,5 und 9,5 zu erlangen,
b) einen Filtrations- und Waschschritt des Böhmit-Präzipitats, das in Schritt a) erlangt wird,
c) einen Schritt zum Inkontaktbringen des in Schritt b) erlangten Präzipitats mit mindestens einer Lithiumquelle,
d) einen Filtrationsschritt der in Schritt c) erlangten Suspension, um eine Paste zu erlangen,
e) einen Trocknungsschritt der am Ende von Schritt d) erlangten Paste bei einer Temperatur zwischen 20 und 80 °C über eine Dauer, die vorzugsweise zwischen 1 Stunde und 20 Stunden liegt,
f) einen Schritt zum Formen der getrockneten Paste durch basisches Extrusionskneten, wobei die getrocknete Paste aus Schritt e) in Anwesenheit einer Menge an Base zwischen 0,5 und 3 Gewichtsprozent, bezogen auf die Trockenmasse, geknetet wird, wobei die Trockenmasse, die die Masse der Paste von Schritt e) ist, 6 Stunden bei 200 °C im Ofen getrocknet wird, wobei die Base ausgewählt ist aus den anorganischen Basen und den organischen Basen in Lösung, und wobei die Paste anschließend einem Extrusionsschritt unterzogen wird,
g) einen Schritt zur hydrothermalen Behandlung des getrockneten geformten Materials, das am Ende von Schritt f) erlangt wird, bei einer Temperatur zwischen 50 und 200 °C und über eine Dauer, die vorzugsweise zwischen 30 Minuten und 12 Stunden liegt.

2. Verfahren nach Anspruch 1, wobei der basische Vorläufer Natriumhydroxid (NaOH) ist.

3. Verfahren nach einem der Ansprüche 1 oder 2, wobei der saure Vorläufer Aluminiumtrichlorid (AlCl₃) ist.

4. Verfahren nach einem der Ansprüche 1 bis 3, wobei der Schritt a) einer Präzipitation von Böhmit bei einer Temperatur zwischen 10 und 25 °C durchgeführt wird.

5. Verfahren nach einem der Ansprüche 1 bis 4, wobei die Menge des basischen Vorläufers gewählt ist, um am Präzipitationsende von Schritt a) ein pH in dem im Reaktionsmedium zwischen 7,7 und 8,8 zu erlangen.

6. Verfahren nach einem der Ansprüche 1 bis 5, wobei die Lithiumquelle(n) ausgewählt ist (sind) aus Lithiumchlorid (LiCI), Lithiumhydroxid (LiOH) Lithiumnitrat (LiNO₃), Lithiumsulfat (Li₂SO₄) und Lithiumcarbonat (Li₂CO₃), einzeln oder als Gemisch.

7. Verfahren nach Anspruch 6, wobei die Lithiumquelle Lithiumchlorid (LiCI) ist.

8. Verfahren nach einem der Ansprüche 1 bis 7, wobei der Schritt f) eines Formens in Anwesenheit von Ammoniak ausgeführt wird.

9. Verfahren nach Anspruch 8, wobei die getrocknete Paste in Anwesenheit einer Menge an Base zwischen 0,5 und 2,5 Gewichtsprozent, bezogen auf die Trockensubstanz, geknetet wird, wobei die Trockensubstanz die Masse der Paste von Schritt e) ist, die in dem Schritt f) eines Formens 6 Stunden bei 200 °C im Ofen getrocknet wird.

## Claims

1. Method for the preparation of a crystallized solid material of formula LiXₓ.2Al(OH)₃,nH₂O, wherein n is between 0.01 and 10, and x is equal to 1 when X is an anion chosen from chloride, hydroxide and nitrate anions, and x is 0.5 when X is an anion selected from sulfate and carbonate anions, wherein the method comprises at least the following steps:
a) a step of precipitating boehmite, in an aqueous medium, of at least one basic precursor chosen from among sodium aluminate, potassium aluminate, aqueous ammonia, sodium hydroxide and potassium hydroxide; and at least one acidic precursor selected from among aluminum sulphate, aluminum chloride, aluminum nitrate, sulfuric acid, hydrochloric acid, and nitric acid, wherein at least one of one of the basic or acidic precursors comprises aluminum, to obtain a boehmite suspension, the step a) operating at a temperature of between 5 and 35°C, and the amount of the basic precursor is chosen in order to obtain a pH of end of precipitation in the reaction medium of between 7.5 and 9.5,
b) a step of filtering and washing the boehmite precipitate obtained in step a),
c) a step of contacting the precipitate obtained in step b) with at least one lithium source,
d) a filtration step of the suspension obtained in step c) to obtain a paste,
e) a step of drying the paste obtained at the end of step d) at a temperature of between 20 and 80°C for a duration of preferably between 1h and 20h,
f) a step of shaping the basic extrusion-mixed dough in which the dried dough resulting from step e) is mixed in the presence of a basic amount of between 0.5 and 3% by weight relative to the dry matter, wherein the dry matter is the weight of the dough resulting from stage e), dried in an oven at 200°C for 6 h, wherein the base is chosen from among inorganic bases and organic bases in solution, and in which the dough is then subjected to an extrusion step,
g) a hydrothermal treatment step of the dried shaped material obtained at the end of step f), at a temperature of between 50 and 200°C and for a duration preferably of between 30 minutes and 12 hours.

2. Method according to claim 1, wherein the basic precursor is sodium hydroxide (NaOH).

3. Method according to one of the claims 1 or 2, wherein the acidic precursor is aluminum trichloride (AlCl₃).

4. Method according to one of the claims 1 to 3, wherein the boehmite precipitation step a) is carried out at a temperature between 10 and 25°C.

5. Method according to one of the claims 1 to 4, wherein the amount of the basic precursor is selected in order to obtain a precipitation end pH of step a) in the reaction medium of between 7.7 and 8.8.

6. Method according to one of the claims 1 to 5, wherein the source(s) of lithium is/are selected from among lithium chloride (LiCl), lithium hydroxide (LiOH) nitrate Lithium (LiNO₃), lithium sulphate (Li₂SO₄) and lithium carbonate (Li₂CO₃), alone or as a mixture.

7. Method according to claim 6, wherein the lithium source is lithium chloride (LiCl).

8. Method according to one of the claims 1 to 7, wherein the f) shaping step is carried out in the presence of ammonia.

9. Method according to claim 8, wherein the dried paste is mixed in the presence of an amount of base of between 0.5 and 2.5% by weight relative to the dry matter, wherein the dry matter is the weight of the paste of step e), dried in an oven at 200°C for 6h in the shaping step f).
